# EUROPÄISCHE PATENTSCHRIFT

(11) **EP 0 909 998 B1**
(45) Veröffentlichungstag und Bekanntmachung des Hinweises auf die Patenterteilung: **10.12.2003**
(21) Anmeldenummer: 98118270.2
(22) Anmeldetag: 26.09.1998
(51) Int. Cl.: G05B 19/409, G05D 23/13

(54) **Berührungslos gesteuerte Armatur**
Non-contact control of armature
Commande à distance d'armature

(30) Priorität: 17.10.1997 DE 19745972
(43) Veröffentlichungstag der Anmeldung: 21.04.1999
(73) Patentinhaber: Grohe Water Technology AG & Co. KG, 58675 Hemer (DE)
(72) Erfinder: Körfgen, Harald, 58675 Hemer (DE); Karakullukcu, Ali, 58706 Menden (DE)

(56) Entgegenhaltungen:
- DE-A- 3 643 519
- DE-A- 3 709 670
- DE-A- 4 306 199
- DE-A- 4 420 331
- US-A- 5 868 311

## Beschreibung

Die Erfindung betrifft eine Ventileinrichtung, insbesondere sanitäre Wasserauslaufarmatur, mit wenigstens einer Wassereinlaßöffnung, einer Wasserauslaßöffnung und einem Regel- und/oder Absperrglied, wobei zur Steuerung des Wasserauslasses oder Wasserdurchflusses zumindest eine elektrische Stellvorrichtung für das Regel- und/oder Absperrglied vorgesehen ist.
Derartige Einrichtungen sind beispielsweise aus den Druckschriften DE 36 43 519 C2 und DE 44 20 331 A1 bekannt. Bei diesen Einrichtungen ist es erforderlich, daß eine Temperaturvoreinstellung von Hand vorgenommen wird. Auch bei dem durch einen Annäherungsschalter gesteuerten Wasserauslauf ist es erforderlich, daß ein Gegenstand, beispielsweise eine Hand des Benutzers, in den Detektionsbereich des Annäherungsschalters gebracht wird. Darüber hinaus sind auch Wasserauslaufsteuerungen, inbesondere für Ärzte, bekannt, die mit Hilfe eines Arms oder Knies des Benutzers bedienbar sind.

Der Erfindung liegt die Aufgabe zugrunde, die im Oberbegriff des Anspruchs 1 angegebene Ventileinrichtung zu verbessern und insbesondere so auszubilden, daß sie ohne das Einbringen von Gegenständen in den Erfassungsbereich eines Annäherungsschalters berührungslos zu betätigen ist.

Diese Aufgabe wird erfindungsgemäß dadurch gelöst, daß der Stelleinrichtung zur berührungslosen Betätigung ein sprecherunabhängiges oder ein sprecherabhängiges Spracherkennungssystem vorgeschaltet ist, welches auf wenigstens zwei Sprachbefehle bezüglich des Wasserauslaufs und des Wasserabsperrens anspricht, so daß mit einem ersten phonetischen Befehl der Wasserauslaß freigegeben und mit einem zweiten phonetischen Befehl der Wasserauslaß abgesperrt wird.
Weitere Ausgestaltungen der Erfindung sind in den Ansprüchen 2 bis 9 angegeben.

Spracherkennungssysteme bzw. Sprachmodule sind bereits bei Haushaltsgeräten mit einer Programmschalteinrichtung, wie Waschmaschinen, Trockner und Elektroherde, sowie in der elektronischen Datenverarbeitung bekannt, wie es aus den Druckschriften DE 37 09 670 A1 und DE 43 06 199 A1 zu entnehmen ist.

Ausführungsbeispiele der Erfindung sind in der Zeichnung dargestellt und werden im folgenden näher beschrieben. Es zeigt
- Fig. 1: eine Ventileinrichtung in schematischer Darstellung in Form einer sanitären Wasserauslaufarmatur, installiert an einem Wasch- oder Spülbecken;
- Fig. 2: ein Schaltbild einer anderen sanitären Ventileinrichtung mit einem vorgeschalteten Mischventil und einem nachgeschalteten Mehrwegeventil.

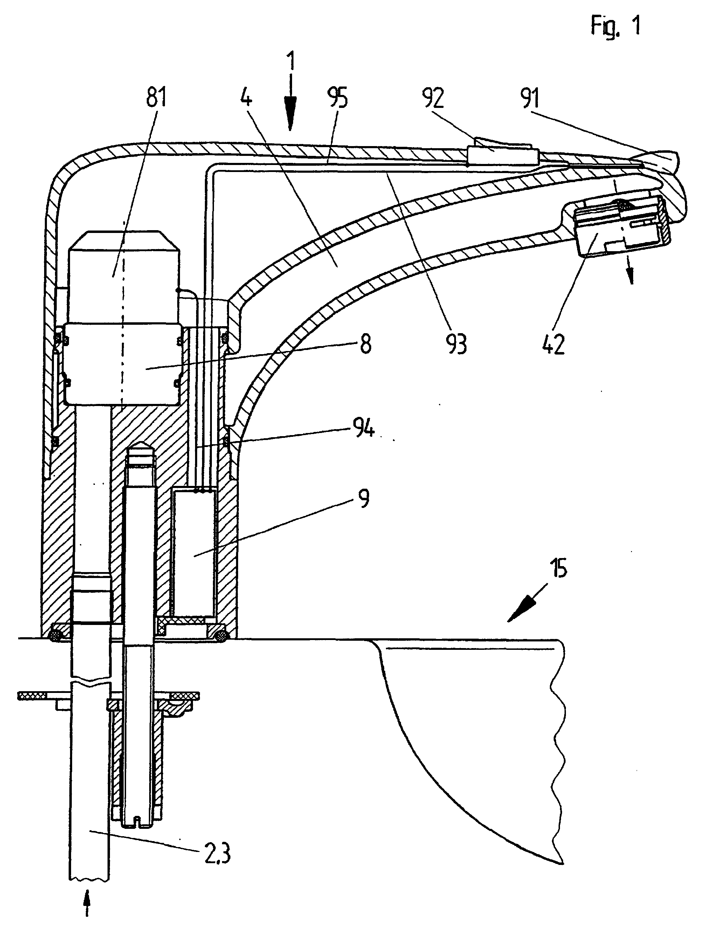

Der Einfachheit halber sind bei den Ausführungsbeispielen in der Zeichnung gleiche oder entsprechende Elemente mit jeweils gleichen Bezugszeichen versehen.
Bei der in Fig. 1 in schematischer Weise dargestellten Einrichtung ist auf einem Wasch- oder Spülbecken 15 eine Auslaufarmatur 1 befestigt. Unterhalb des Waschoder Spülbeckens 15 ist ein Kaltwassereinlaß 3 oder Warmwassereinlaß 2 ausgebildet, der mit einer in der Auslaufarmatur 1 integrierten Ventileinrichtung 8 in Verbindung steht. Aus der Ventileinrichtung 8 ist ein Wasserauslaß 4 in Form einer Rohrleitung herausgeführt und mündet in einem Auslaufmundstück 42, von dem ein Freistrahl in das Wasch- oder Spülbecken 15 abgegeben werden kann.
An der Ventileinrichtung 8 ist eine Stellvorrichtung 81 in Form einer Elektromagnetspule ausgebildet, die von einem Spracherkennungssystem 9 gesteuert und mit elektrischer Energie über ein Verbindungskabel 94 versorgt wird. Das in Form eines Blockschaltbildes angegebene Spracherkennungssystem 9 enthält einen Leistungsverstärker, wobei der Block von einer in der Zeichnung nicht dargestellten integrierten Batterie oder einer Leitung mit elektrischer Energie versorgt werden kann. Mit dem Spracherkennungssystem 9 (Sprachmodul) ist über ein Verbindungskabel 93 ein Sprachwandler 91 in Form eines Mikrofons verbunden. Schließlich ist ein mechanischer Schalter 92 vorgesehen, mit dem über ein Verbindungskabel 95 das Spracherkennungssystem 9 vom Benutzer in Betrieb oder außer Betrieb gesetzt werden kann.

Die Auslaufarmatur 1 hat folgende Funktionsweise:
Wird vom Benutzer mit dem Schalter 92 das Spracherkennungssystem 9 in Betrieb gesetzt, so kann durch einen phonetischen Befehl, wie beispielsweise **"Öffnen",** der von dem Sprachwandler 91 in elektrische Signale umgesetzt wird, vom Spracherkennungssystem 9 ein Signal erzeugt werden, das über einen Leistungsverstärker die Stellvorrichtung 81 (Elektromagnetspule) mit elektrischer Energie versorgt und die Ventileinrichtung 8 in die Offenstellung bringt. Das von dem Warmwassereinlaß 2 oder Kaltwassereinlaß 3 zuströmende Wasser gelangt somit über den Wasserauslaß 4 zu dem Auslaufmundstück 42 und wird von hier als Freistrahl abgegeben. Nach dem Austreten der benötigten Wassermenge kann mit einem anderen phonetischen Befehl, z. B. **"Schließen",** der Wasserausfluß durch den Wasserauslaß 4 und das Auslaufmundstück 42 abgesperrt werden. Hierbei wird wiederum vom Sprachwandler 91 der phonetische Befehl in elektrische Signale umgewandelt und über das Kabel 93 dem Spracherkennungssystem 9 zugeleitet. In dem Spracherkennungssystem 9 wird hierauf ein Signal erzeugt, mit dem der elektrische Energiefluß zur Stellvorrichtung 81 unterbunden wird, so daß nunmehr die Stellvorrichtung 81 die Ventileinrichtung 8 schließt.
Die Ventileinrichtung 8 ist dabei von einem monostabilen Magnetventil ausgebildet. Selbstverständlich kann auch ein bistabiles Magnetventil eingesetzt werden, das einen erheblich geringeren elektrischen Energiebedarf hat. In diesem Fall wäre von dem Spracherkennungssystem über den Leistungsverstärker jeweils beim Öffnungsvorgang und beim Schließvorgang lediglich ein elektrischer Impuls an die Stellvorrichtung 81 abzugeben.
Neben der Steuerung des Wasserauslaufes über das Spracherkennungssystem 9 kann die Ventileinrichtung 8 so ausgebildet sein, daß sie parallel auch von Hand aus bedienbar ist. Eine derartige Einrichtung ist in der Figur 1 nicht dargestellt.

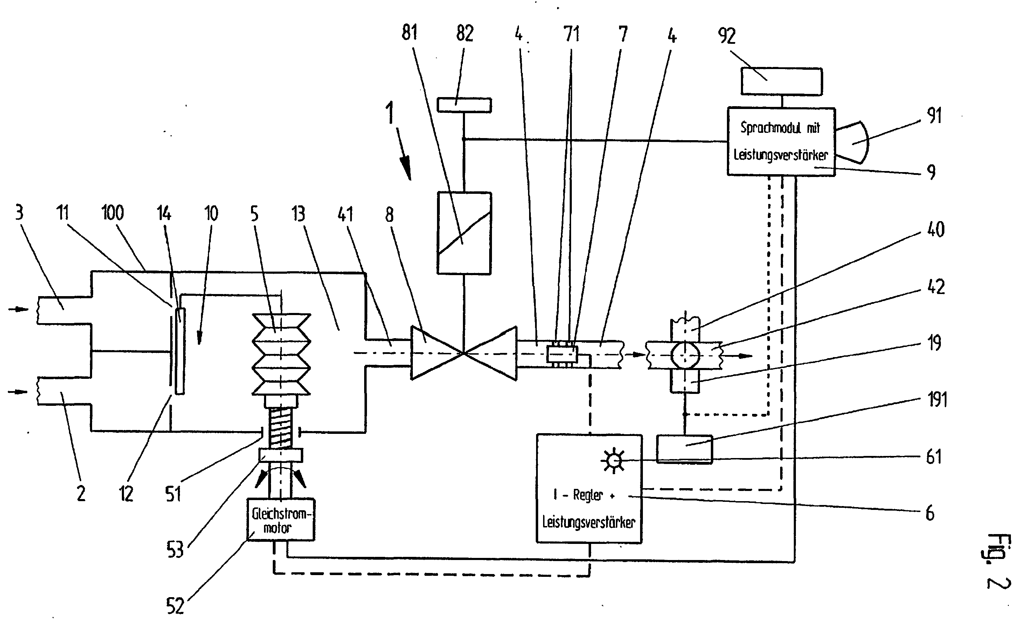

In Fig. 2 ist als Schaltplan eine andere Auslaufarmatur 1 für Kaltwasser, Heißwasser oder Mischwasser dargestellt, wobei zusätzlich an dem Wasserauslaß 4 ein Mehrwegeventil 19 nachgeschaltet und über eine Leitung (gepunktete Linie) an das Spracherkennungssystem 9 angeschlossen ist, mit dem beispielsweise wahlweise ein Brauseanschluß 40 oder ein Wannenanschluß 42 mit Wasser versorgt werden kann.
Die Auslaufarmatur 1 entspricht hierbei dem in Fig. 1 gezeigten Ausführungsbeispiel, wobei zusätzlich als Block ein Handbetätigungsglied 82 für die Ventileinrichtung 8 vorgesehen ist. Das Mischventil 10 weist hierbei ein Mischventilgehäuse 100 auf, an dem ein Warmwassereinlaß 2, ein Kaltwassereinlaß 3 und ein Mischwasserauslaß 41 angeordnet ist. Im Mischventilgehäuse 100 ist eine Einlaßöffnung 11 für Kaltwasser und eine Einlaßöffnung 12 für Warmwasser ausgebildet, die mit einem Mischventilglied 14 zusammenwirken. Das Mischventilglied 14 ist an einem Thermostaten in Form eines Dehnstoffelements 5 befestigt. Das Dehnstoffelement 5 mit dem Mischventilglied 14 ist dabei von einer Schraubspindel 51 in eine zu den Einlaßöffnungen 11 und 12 bestimmte Lage zur Voreinstellung der Sollwerttemperatur des Mischwassers stellbar. Die Schraubspindel 51 wird hierbei von einem Stellmotor 52, vorzugsweise Gleichstrommotor, in die jeweils erforderliche Position zu dem Mischventilgehäuse 100 bewegt. Der Stellmotor 52 ist über eine Leitung (ausgezogene Linie) mit dem Spracherkennungssystem 9 verbunden.

Die vorstehend beschriebene Einrichtung hat folgende Funktionsweise:
Die Auslaufarmatur 1 wird über den mechanischen Schalter 92 in Betrieb genommen.
Wird hiernach von dem Benutzer der phonetische Befehl **"Öffnen"** gegeben, so wird der Wasserausfluß durch den Wasserauslaß 4 freigegeben. Hierbei tritt zunächst kaltes Wasser aus. Wird hiernach ein weiterer phonetischer Befehl **"Warm"** gegeben, so wird das Mischventil 10 von dem Spracherkennungssystem 9 über den Stellmotor 52 auf 38°C der Mischwassertemperatur eingestellt, so daß nunmehr über das Dehnstoffelement 5 als Proportionalregler temperiertes Wasser von 38°C über den Wasserauslaß 4 abgegeben wird.
Mit dem phonetischen Befehl **"Heiß"** wird von dem Spracherkennungssystem 9 das Mischventilglied 14 in die Heißwasserstellung gebracht, so daß nunmehr nur noch das über den Warmwassereinlaß 2 zuströmende Heißwasser durch den Wasserauslaß 4 abgegeben wird. Mit dem phonetischen Befehl **"Kalt"** kann wieder Kaltwasser, mit dem phonetischen Befehl **"Warm"** kann wieder temperiertes Wasser eingestellt werden.
Mit dem phonetischen Befehl **"Schließen"** wird der Wasserausfluß abgesperrt.

Zur Verbesserung des Mischverhaltens des Mischventils 10 kann dieses, beispielsweise um Störgrößen, wie Änderung der Vorlauftemperatur, Druckschwankungen in dem Versorgungsleitungsnetz, Durchflußmengenänderungen etc., auszuschalten, zusätzlich zu dem als Proportionalregler wirkenden Dehnstoffelements 5 mit einem als Integralregler ausgebildeten elektrischen Hilfsregler 6 ausgestattet werden, welcher über Leitungen (gestrichelte Linien) mit dem Spracherkennungssystem 9 verbunden ist. Auf den phonetischen Befehl **"Warm"** wird hierbei der Hilfsregler 6 auf 38°C Sollwerttemperatur des Mischwassers gestellt, so daß von dem Hilfsregler 6 entsprechende Stellsignale an den Stellmotor 52 gesandt werden und das Mischventilglied 14 in die entsprechende Position in dem Mischventilgehäuse 100 gebracht wird. Die Ist-Temperatur des abgegebenen Mischwassers wird nun von einem mittels Manschetten 71 am Auslauf 4 befestigten Temperaturfühler 7 festgestellt und ein entsprechendes elektrisches Signal über eine Leitung (gestrichelte Linie) an den als Integralregler ausgebildeten Hilfsregler 6 geleitet. Wird von dem Hilfsregler 6 eine Sollwertabweichung festgestellt, so wird ein entsprechendes elektrisches Signal erzeugt und dem Stellmotor zugeleitet, so daß eine entsprechende Korrektur der Stellung des Mischventilglieds 14 im Mischventilgehäuse 100 erfolgt. Mit dem phonetischen Befehl **"Wärmer"** kann die Sollwerttemperatur schrittweise, beispielsweise um 5°C, erhöht werden; mit dem phonetischen Befehl **"Kälter"** kann die Sollwerttemperatur schrittweise entsprechend verringert werden.
Selbstverständlich kann zur Mischwassertemperaturregelung auch der mechanische Proportionalregler in Form des Dehnstoffelements 5 eingespart werden, wobei dann die Temperaturregelung allein von dem Regler 6 über den Stellmotor 52 und dem an der Schraubspindel 51 entsprechend gehalterten Mischventilglied 14 erfolgt.

Zusätzlich ist an dem Wasserauslaß 4 das Mehrwegeventil 19 nachgeschaltet und an das Spracherkennungssystem 9 mit einer Leitung (in der Zeichnung durch eine gepunktete Linie angedeutet) angeschlossen. Auf den phonetischen Befehl **"Brause"** wird von dem Spracherkennungssystem 9 das Mehrwegeventil 19 angesteuert und in die Position gebracht, daß das ausfließende Wasser in den Brauseanschluß 40 geleitet wird. Wird dagegen der phonetische Befehl **"Wanne"** gegeben, so wird das Mehrwegeventil 19 vom Spracherkennungssystem 9 derart angesteuert, daß der Wasserauslaß in den Wannenanschluß 42 geführt wird.
Die wasserführenden Einzelaggregate, nämlich das Mischventil 10, die Auslaufarmatur 1 und das Mehrwegeventil 19 können neben der Steuerung durch das Spracherkennungssystem 9 auch jeweils von einem Handbetätigungsglied 53,82,191 vom Benutzer eingestellt werden. Darüber hinaus ist der Hilfsregler 6 mit einem handbetätigbaren Sollwertsteller 61 versehen.

Zweckmäßig wird ein sprecherunabhängiges Spracherkennungssystem in Form eines lernfähigen Sprachmoduls eingesetzt, bei dem vom Benutzer die gewünschten Befehlsworte bestimmt und eingegeben werden können, so daß das Spracherkennungssystem sowohl im In- als auch im Ausland eingesetzt werden kann.
Außerdem kann das Spracherkennungssystem 9 zweckmäßig so ausgebildet werden, daß die jeweils gewünschten Zwischenstellungen der Auslaufarmatur 1, des Mischventils 10, des Mehrwegeventils 19, des Hilfsreglers 6 an dem Handbetätigungsglied 82,53,191 und dem Sollwertsteller 61 von Hand eingestellt werden, die dann von dem Spracherkennungssystem 9 übernommen und gespeichert werden.

Bei den vorstehend beschriebenen Ausführungsbeispielen ist zum Ein- und Ausschalten der berührungslosen Steuerung ein mechanischer Schalter 92 vorgesehen. Selbstverständlich kann hier auch ein Annäherungsschalter, insbesondere Infrarotlicht gesteuerte Schalteinrichtung, oder ein Zeitschalter etc. zum Ein- und Ausschalten vorgesehen werden.

## Patentansprüche

1. Ventileinrichtung, insbesondere sanitäre Wasserauslaufarmatur (1), mit wenigstens einer Wassereinlaßöffnung, einer Wasserauslaßöffnung und einem Regelund/oder Absperrglied, wobei zur Steuerung des Wasserauslasses (4) oder Wasserdurchflusses zumindest eine elektrische Stellvorrichtung (81) für das Regel- und/oder Absperrglied vorgesehen ist, **dadurch gekennzeichnet, daß** der Stellvorrichtung (81) zur berührungslosen Betätigung ein sprecherunabhängiges oder ein sprecherabhängiges Spracherkennungssystem (9) vorgeschaltet ist, welches auf wenigstens zwei Sprachbefehle bezüglich des Wasserauslaufs und des Wasserabsperrens anspricht, so daß mit einem ersten phonetischen Befehl der Wasserauslaß (4) freigegeben und mit einem zweiten phonetischen Befehl der Wasserauslaß (4) abgesperrt wird.

2. Ventileinrichtung nach Anspruch 1, **dadurch gekennzeichnet, daß** das Regel- und/oder Absperrglied der Ventileinrichtung (8) in der Öffnungsposition eine halb geöffnete Stellung hat und von nachgeordneten phonetischen Befehlen stufenweise oder stufenlos die volle Öffnung oder die weitere Drosselung einstellbar ist.

3. Ventileinrichtung nach Anspruch 1 oder 2, **dadurch gekennzeichnet, daß** stromaufwärts vor der Ventileinrichtung (8) ein Mischventil (10) für die Mischung von Kalt- und Warmwasser angeordnet ist, welches parallel von dem Spracherkennungssystem (9) mit phonetischen Befehlen in eine Kaltwasserstellung, eine Mischwasserstellung und eine Heißwasserstellung bringbar ist.

4. Ventileinrichtung nach Anspruch 3, **dadurch gekennzeichnet, daß** das Mischventil (10) eine thermostatgeregelte Wassermischbatterie ist, deren Mischwassertemperatur mit einem Stellmotor (52) von dem Spracherkennungssystem (9) mit phonetischen Befehlen einstellbar ist.

5. Ventileinrichtung nach Anspruch 3, **dadurch gekennzeichnet, daß** das Mischventil (10) mit einer elektrischen Temperaturregeleinrichtung versehen ist, deren Sollwerttemperatur für das Mischwasser über das Spracherkennungssystem (9) mit phonetischen Befehlen einstellbar ist.

6. Ventileinrichtung nach wenigstens einem der Ansprüche 1 bis 5, **dadurch gekennzeichnet, daß** der Ventileinrichtung (8) ein Mehrwegeventil (19) nachgeschaltet ist, welches parallel von dem Spracherkennungssystem (9) mit phonetischen Befehlen in die gewünschte Durchflußposition bringbar ist.

7. Ventileinrichtung nach wenigstens einem der Ansprüche 1 bis 6, **dadurch gekennzeichnet, daß** das Spracherkennungssystem (9) mit einem Leistungsverstärker versehen ist.

8. Ventileinrichtung nach wenigstens einem der Ansprüche 1 bis 7, **dadurch gekennzeichnet, daß** das Spracherkennungssystem (9) mit den nachgeordneten elektrischen Baueinheiten von einem mechanischen Schalter (92) oder einem Annäherungsschalter, insbesondere Infrarotlicht gesteuerte Schalteinrichtung, oder einem Zeitschalter ein- und ausschaltbar ist.

9. Ventileinrichtung nach wenigstens einem der Ansprüche 1 bis 8, **dadurch gekennzeichnet, daß** die Stellvorrichtung (81) die Schraubspindel (51), das Mehrwegeventil (19) und der Hilfsregler (6) jeweils von einem Handbetätigungsglied (53,82,191,61) einstellbar ist, und die von Hand eingestellte Position von dem Spracherkennungssystem (9) übernommen wird.

## Claims

1. Valve arrangement, especially a sanitary water discharge fitting (1), having at least one water inlet opening, a water discharge opening and a control and/or shut-off element, at least one electrical control device (81) for the control and/or shut-off element being provided for control of the water outlet (4) or water channel, **characterised in that**, for contactless operation, upstream of the control device (81) there is arranged a voice-independent or voice-dependent voice recognition system (9), which is responsive to at least two spoken commands in respect of water discharge and water shut-off, so that at a first phonetic command the water outlet (4) is unblocked and at a second phonetic command the water outlet (4) is shut off.

2. Valve arrangement according to claim 1, **characterised in that**, in the open position of the valve arrangement (8), the control and/or shut-off element thereof has a half-opened setting and, by subsequent phonetic commands, full opening or further throttling is adjustable by degrees or continuously.

3. Valve arrangement according to claim 1 or 2, **characterised in that** a mixing valve (10) for mixing cold and hot water is arranged upstream of the valve arrangement (8), which mixing valve is arranged to be brought in parallel by the voice recognition system (9) using phonetic commands into a cold water setting, a mixed water setting and a hotwater setting.

4. Valve arrangement according to claim 3, **characterised in that** the mixing valve (10) is a thermostatically controlled water mixer tap, the mixed water temperature of which is adjustable with a servomotor (52) by the voice-recognition system (9) using phonetic commands.

5. Valve arrangement according to claim 3, **characterised in that** the mixing valve (10) is provided with an electrical temperature-regulating device, the set-point temperature of which for the mixed water is adjustable by way of the voice recognition system (9) using phonetic commands.

6. Valve arrangement according to at least one of claims 1 to 5, **characterised in that** downstream of the valve arrangement (8) there is arranged a multiway valve (19), which is arranged to be brought in parallel by the voice recognition system (9) using phonetic commands into the desired through-flow position.

7. Valve arrangement according to at least one of claims 1 to 6, **characterised in that** the voice-recognition system (9) is provided with a power amplifier.

8. Valve arrangement according to at least one of claims 1 to 7, **characterised in that** the voice-recognition system (9) with the downstream electrical subassemblies is arranged to be switched on and off by a mechanical switch (92) or a proximity switch, especially a switch means controlled by infrared light, or by a time switch.

9. Valve arrangement according to at least one of claims 1 to 8, **characterised in that** the control device (81), the screw spindle (51), the multiway valve (19) and the auxiliary controller (6) are adjustable by a respective hand-operated element (53, 82, 191, 61), and the position set by hand is adopted by the voice-recognition system (9).

## Revendications

1. Dispositif de vanne, en particulier, robinetterie sanitaire (1), comportant au moins une ouverture d'admission d'eau, une ouverture d'évacuation d'eau, et un organe de régulation et/ou de fermeture, où, pour commander l'évacuation (4) de l'eau ou le débit d'eau, au moins un dispositif de réglage électrique (81) est prévu pour l'organe de régulation et/ou de fermeture,
**caractérisé en ce que**
un système de reconnaissance vocale (9) indépendant du locuteur ou dépendant du locuteur est disposé en amont du dispositif de réglage (81) pour un actionnement sans contact, qui réagit à au moins deux commandes vocales ayant trait à l'écoulement de l'eau et à l'arrêt de l'écoulement de l'eau, de façon à ce que, par une première commande phonétique, l'évacuation (4) de l'eau soit autorisée et par une deuxième commande phonétique, l'évacuation (4) de l'eau soit interdite.

2. Dispositif de vanne selon la revendication 1,
**caractérisé en ce que**
l'organe de régulation et/ou de fermeture du dispositif de vanne (8) possède, en position ouverte, une position semi-ouverte et que, par des commandes phonétiques ultérieures, graduellement ou de manière continue, la pleine ouverture ou l'étranglement supplémentaire du débit peut être réglé.

3. Dispositif de vanne selon la revendication 1 ou 2,
**caractérisé en ce qu'**
une vanne mélangeuse (10) pour le mélange de l'eau chaude et de l'eau froide est disposée en amont du dispositif de vanne (8), qui, parallèlement, peut être mise par le système de reconnaissance vocale (9) au moyen de commandes phonétiques en une position "eau froide", une position "eau mélangée" et une position "eau chaude".

4. Dispositif de vanne selon la revendication 3,
**caractérisé en ce que**
la vanne mélangeuse (10) est une robinetterie mélangeuse régulée par thermostat, dont la température d'eau mélangée peut être réglée au moyen d'un servomoteur (52) par le système de reconnaissance vocale (9) par des commandes phonétiques.

5. Dispositif de vanne selon la revendication 3,
**caractérisé en ce que**
la vanne mélangeuse (10) est pourvue d'un dispositif électrique de régulation de température dont la valeur de consigne de température pour l'eau mélangée peut être réglée par le système de reconnaissance vocale (9) au moyen de commandes phonétiques.

6. Dispositif de vanne selon au moins l'une quelconque des revendications 1 à 5,
**caractérisé en ce qu'**
une vanne multivoie (19) est raccordée en aval du dispositif de vanne (8) qui, parallèlement, peut être mise par le système de reconnaissance vocale (9), au moyen de commandes phonétiques, en la position d'écoulement souhaitée.

7. Dispositif de vanne selon au moins l'une quelconque des revendications 1 à 6,
**caractérisé en ce que**
le système de reconnaissance vocale (9) est pourvu d'un amplificateur de puissance.

8. Dispositif de vanne selon au moins l'une quelconque des revendications 1 à 7,
**caractérisé en ce que**
le système de reconnaissance vocale (9) avec les unités électriques en aval peut être mis en service ou hors-service par un commutateur mécanique (92) ou par un commutateur à détection de proximité, en particulier un dispositif de commutation commandé par lumière infrarouge, ou un commutateur à temporisation.

9. Dispositif de vanne selon au moins l'une quelconque des revendications 1 à 8,
**caractérisé en ce que**
le dispositif de réglage (81), la broche filetée (51), la vanne multivoie (19) et le régulateur d'assistance (6) sont chacun réglables au moyen d'un organe d'actionnement manuel (53, 82, 191, 61) et que la position réglée manuellement est reprise par le système de reconnaissance vocale (9).
